# EUROPÄISCHE PATENTANMELDUNG

(11) **EP 3 498 939 A1**
(43) Veröffentlichungstag der Anmeldung: **19.06.2019**
(21) Anmeldenummer: 18211216.9
(22) Anmeldetag: 10.12.2018
(51) Int. Cl.: E04H 7/04, F24H 1/18, F28D 20/00

(54) **BEHÄLTER**

(30) Priorität: 12.12.2017 DE 102017222452
(71) Anmelder: Robert Bosch GmbH, 70442 Stuttgart (DE)
(72) Erfinder: Stockel, Markus, 48282 Emsdetten (DE); Lang, Johannes, 35075 Gladenbach (DE)

(57) **Zusammenfassung**

Die Erfindung geht aus von einem Behälter (1) zum Aufnehmen eines Mediums mit einer Behälterwand (2). Die Behälterwand (2) schließt einen Behälterinnenraum gegenüber einem Außenraum bzw. gegenüber einer Außenumgebung (8) ab. Erfindungsgemäß wird vorgeschlagen, den Behälter (1) mit mindestens einem Versteifungsmittel (5) zur Versteifung der Behälterwand (2) gegenüber inneren und/oder äußeren Drücken und/oder Kräften auszustatten, wobei das Versteifungsmittel (5) mindestens eine einteilig mit der Behälterwand (2) ausgebildete, Sicken-ähnliche und/oder Rippen-ähnliche Auswölbung (6) aus der Behälterwand (2) umfasst.

## Beschreibung

### Stand der Technik

Es ist bereits ein Behälter zum Aufnehmen eines Mediums mit einer Behälterwand bekannt.

### Offenbarung der Erfindung

Die Erfindung geht aus von einem Behälter zum Aufnehmen eines Mediums mit einer Behälterwand. Die Behälterwand schließt einen Behälterinnenraum gegenüber einem Außenraum bzw. gegenüber einer Außenumgebung ab.

Erfindungsgemäß wird vorgeschlagen, den Behälter mit mindestens einem Versteifungsmittel zur Versteifung der Behälterwand gegenüber inneren und/oder äußeren Drücken und/oder Kräften auszustatten, wobei das Versteifungsmittel mindestens eine einteilig mit der Behälterwand ausgebildete, Sicken-ähnliche und/oder Rippen-ähnliche Auswölbung aus der Behälterwand umfasst.

Die Behälterwand ist während eines Lebenszyklus' des Behälters verschiedenen auf sie einwirkenden inneren und/oder äußeren Drücken und/oder Kräften ausgesetzt. Dazu zählen beispielsweise ein innerer Druck, beispielsweise hervorgerufen durch ein Gewicht und/oder einen Druck eines im Behälter aufgenommenen Mediums; ein äußerer Druck, beispielsweise hervorgerufen durch ein Gewicht und/oder einen Druck eines Mediums, das außen um den Behälter herum vorhanden ist; eine einwirkende Kraft, beispielsweise hervorgerufen durch ein Eigengewicht des Behälters und/oder an die Behälterwand angrenzende Komponenten. Der infrage kommende Lebenszyklus umfasst die Herstellung, Lagerung, Transport und Aufstellung sowie den Betrieb des Behälters. Das Versteifungsmittel umfasst mindestens eine Auswölbung aus der Behälterwand, die wie eine Sicke und/oder wie eine Rippe einteilig aus der Behälterwand herausgeformt, insbesondere herausgedrückt, ist. Die Auswölbung ist senkrecht zur Behälterwand herausgeformt und kann nach außen in Richtung eines Außenraums bzw. einer Außenumgebung, und/oder nach innen in Richtung des Behälterinnenraums herausgewölbt sein. Die Auswölbung kann insbesondere mittels eines Prägestempels aus einer ursprünglich ebenen oder gebogenen Behälterwand herauswölbt werden, dabei kann ein Herauswölben der Auswölbung aus der Behälterwand ohne einen begrenzenden Anschlag oder auch gegen einen Anschlag (Matrize) erfolgen. Das Versteifungsmittel erhöht den Widerstand, den die Behälterwand den Drücken und/oder Kräften entgegensetzen kann, und zwar erhöht das Versteifungsmittel die Steifigkeit der Behälterwand insbesondere in einer Richtung senkrecht zu einer Oberfläche der Behälterwand und bewirkt so, dass die Behälterwand sich nicht oder zumindest weniger verformt (beispielsweise eindellt).

Des Weiteren wird vorgeschlagen, dass die Behälterwand mindestens einen zylindrischen Abschnitt umfasst und dass das Versteifungsmittel an dem zylindrischen Abschnitt ausgebildet ist. Daneben kann die Behälterwand mindestens zwei Böden, wie beispielsweise in Form von Korbbogenböden und/oder Klöpperböden, umfassen. Mindestens ein weiteres Versteifungsmittel kann in einem oder beiden Böden ausgebildet sein.

Ferner wird vorgeschlagen, dass die Auswölbungen eines Versteifungsmittels im Wesentlichen gleiche Abmessungen und gleiche Form aufweisen. Das hat den Vorteil, dass alle Auswölbungen mit dem selben Werkzeug hergestellt werden können.

Nach einer Ausführungsform der Erfindung weist die Auswölbung eine Haupterstreckungslänge L auf, die entlang der Behälterwand ausgebildet ist. Insbesondere ist die Auswölbung geradlinig oder bogenförmig ausgebildet, kann aber auch einen V-förmigen, S-förmigen oder ähnlichen Verlauf aufweisen. Die Haupterstreckungslänge L ist die Länge der längsten Erstreckung der Auswölbung.

Gemäß einer vorteilhaften Ausführungsform der Erfindung ist das Versteifungsmittel und/oder ist die mindestens eine Auswölbung längs einer (gedachten) Umfangslinie U auf dem zylindrischen Abschnitt ausgebildet. Unter einer (gedachten) Umfangslinie U wird eine gedachte Schnittlinie des zylindrischen Abschnitts mit einer gedachten Querebene, die senkrecht auf einer Längsachse X des zylindrischen Abschnitts steht, verstanden. Längs einer Umfangslinie bedeutet bei geradliniger Ausbildung der Auswölbung, dass die Ausrichtung der Haupterstreckungslänge L der Auswölbung auf oder parallel zu der Umfangslinie U verläuft. Bei nicht geradliniger Ausbildung (V-förmiger, S-förmiger oder ähnlicher Verlauf) der Auswölbung verläuft eine Symmetrielinie oder eine Längsachse der Ausbildung auf oder parallel zu der Umfangslinie U.

Bei einer weiteren vorteilhaften Ausführungsform der Erfindung ist das Versteifungsmittel schräg in einem Winkel W zu einer Umfangslinie U auf dem zylindrischen Abschnitt ausgebildet. Der Winkel W ist aus einem Intervall von 5° bis 90° ausgewählt, bevorzugt aus einem Intervall von 20° bis 70°, besonders bevorzugt aus einem Intervall von 30° bis 60°. Schräg in einem Winkel W zu einer Umfangslinie U bedeutet bei geradliniger Ausbildung der Auswölbung, dass die Ausrichtung der Haupterstreckungslänge L der Auswölbung schräg in einem Winkel W zu der Umfangslinie U verläuft. Bei nicht geradliniger Ausbildung der Auswölbung verläuft eine Symmetrielinie oder eine Längsachse der Ausbildung schräg in einem Winkel W zu der Umfangslinie U.

Bei einer weiteren vorteilhaften Ausführungsform der Erfindung ist das Versteifungsmittel in einem Umfangsstreifen S auf dem zylindrischen Abschnitt ausgebildet. Dabei ergibt sich der Umfangsstreifen S als gedachte Schnittfläche des zylindrischen Abschnitts mit einem gedachten Quader, der mit einer Quaderfläche senkrecht zu einer Längsachse X des zylindrischen Abschnitts steht.

Bei einer besonders vorteilhaften Ausführungsform der Erfindung umfasst das Versteifungsmittel eine Mehrzahl von Auswölbungen, wobei die Auswölbungen in Umfangsrichtung aufeinander folgen, und wobei in Umfangsrichtung unmittelbar aufeinander folgende Auswölbungen durch nicht-ausgewölbte Bereiche der Behälterwand voneinander beabstandet sind. Der in Umfangsrichtung gemessene Abstand zwischen zwei unmittelbar aufeinander folgenden Auswölbungen heißt A1. Während die Auswölbungen die Steifigkeit der Behälterwand insbesondere in einer Richtung senkrecht zur Oberfläche der Behälterwand erhöhen, sorgen insbesondere die nicht-ausgewölbten Bereiche zwischen den Auswölbungen dafür, dass eine hohe Steifigkeit längs der Behälterwandoberfläche und quer zur Umfangsrichtung erhalten bleibt. Diese Ausführungsform ist besonders vorteilhaft für beschichtete, beispielsweise emaillierte, Behälterwände, bei denen die Beschichtung, beispielsweise die Emailleschicht, keine oder nur geringe Verformungen aufnehmen kann, damit Brüche oder ein Abplatzen vermieden wird.

Es wird vorgeschlagen, ein Verhältnis von Haupterstreckungslänge L einer Auswölbung zum Abstand A1 gleich oder größer als 1, insbesondere aus einem Bereich 1 bis 3, bevorzugt aus einem Bereich 1,6 bis 2 zu wählen. Dies hat sich als gute Optimierung für folgende zwei Ziele herausgestellt - Versteifung senkrecht zur Behälterwandoberfläche sowie Versteifung längs der Behälterwandoberfläche.

Alternativ wird vorgeschlagen, ein Verhältnis von Haupterstreckungslänge L einer Auswölbung zum Abstand A1 kleiner als 1, insbesondere aus einem Bereich 0,3 bis 1, bevorzugt aus einem Bereich 0,5 bis 1, zu wählen.

Ferner wird vorgeschlagen, ein Verhältnis von Haupterstreckungslänge L einer Auswölbung zu einem Umfang des zylindrischen Abschnitts aus einem Bereich 0,02 bis 0,1, bevorzugt aus einem Bereich 0,05 bis 0,07 zu wählen.

Insbesondere für dickwandige und/oder beschichtete, beispielsweise emaillierte, Behälter wird vorgeschlagen, eine Höhe H einer Auswölbung kleiner als die Behälterwanddicke zu wählen, wobei H die senkrecht zur Behälterwand gemessene Höhe der Auswölbung ist. Insbesondere für dünnwandige und/oder unbeschichtete Behälter, beispielsweise solche aus teuren Materialien wie insbesondere Edelstahl, wird vorgeschlagen, eine Höhe H einer Auswölbung größer als die Behälterwanddicke zu wählen.

Gemäß einer weiteren Ausführungsform der Erfindung wird vorgeschlagen, die Breite B einer Auswölbung gleich oder größer, insbesondere mindestens fünfmal größer, als eine Behälterwanddicke zu wählen, wobei die Breite B ein Maß senkrecht zu einer Haupterstreckungslänge L und senkrecht zu einer Höhe H der Auswölbung ist.

Gemäß einer weiteren vorteilhaften Ausführungsform der Erfindung sind mindestens zwei Versteifungsmittel vorgesehen, die längs zweier mittels eines Abstands A2 beabstandeter Umfangslinien U und/oder in zwei mittels eines Abstands A2 beabstandeter Umfangsstreifen S auf dem zylindrischen Abschnitt ausgebildet sind. Es wird vorgeschlagen, ein Verhältnis von Abstand A2 zu einer Breite B der Auswölbungen aus einem Bereich zwischen 1 und 10 und bevorzugterweise größer als 3 zu wählen. Ferner wird vorgeschlagen, ein Verhältnis von Abstand A2 zu Abstand A1 größer als 1 zu wählen. Beispielsweise sind zwei so ausgebildete Versteifungsmittel in einem Bereich in der Mitte einer Länge des zylindrischen Abschnitts angeordnet, da dieser Bereich als am meisten von einer unerwünschten Verformung gefährdet erkannt wurde. Alternativ können auch drei oder mehrere so ausgebildete Versteifungsmittel vorgesehen sein.

Bei einer weiteren Ausführungsform der Erfindung sind die Auswölbungen zweier benachbarter Versteifungsmittel in Umfangsrichtung gegeneinander versetzt und/oder gegeneinander verdreht. Insbesondere sind die Auswölbungen zweier benachbarter Versteifungsmittel in Umfangsrichtung so gegeneinander versetzt und/oder gegeneinander verdreht, dass sich ihre Projektionen in Richtung einer Längsachse X des zylindrischen Abschnitts auf eine gedachte Umfangslinie U auf dem zylindrischen Abschnitt teilweise überdecken. Das erhöht zusätzlich die Steifigkeit der Behälterwand.

Eine weitere vorteilhafte Ausgestaltung der Erfindung ist dadurch gekennzeichnet, dass koaxial außen um den zylindrischen Abschnitt des Behälters und um die Versteifungsmittel ein Mantelwärmeübertrager angeordnet ist. Der Mantelwärmeübertrager dient dem Erwärmen eines Mediums im Inneren des Behälters. Beispielsweise funktioniert der Mantelwärmeübertrager nach dem Prinzip einer Durchströmung mit einem Wärmeträgermedium und weist dazu einen durchströmbaren Wärmeträgerraum und eine den Wärmeträgerraum gegenüber einer Außenumgebung abdichtende Wärmeübertragerwand auf. Ferner wird vorgeschlagen, Versteifungsmittel auch an der Wärmeübertragerwand vorzusehen. Das Wärmeträgermedium kann zumindest zeitweise unter Druck stehen und diesen Druck auf die Behälterwand des Behälters übertragen. Die Versteifungsmittel erhöhen die Steifigkeit der Behälterwand zum Beispiel auch gegenüber dem Druck des Wärmeträgermediums.

Beispielsweise können die Auswölbungen des mindestens einen Versteifungsmittels an der Behälterwand nach außen in den Wärmeträgerraum hinein gewölbt sein, und kann die Wärmeübertragerwand des Mantelwärmeübertragers auf den Auswölbungen aufliegen. Hierbei hat eine Ausführungsform der Erfindung mit einer Mehrzahl von Auswölbungen, wobei die Auswölbungen in Umfangsrichtung aufeinander folgen und wobei in Umfangsrichtung unmittelbar aufeinander folgende Auswölbungen durch nicht-ausgewölbte Bereiche der Behälterwand beabstandet sind, den besonderen Vorteil, dass sich zwischen den nicht-ausgewölbten Bereichen und der Wärmeübertragerwand durchströmbare Lücken bilden, die ein Wärmeträgermedium ungehindert durchströmen kann. So bilden sich keine Wärmeübertragerbereiche mit stagnierendem Wärmeträgermedium, so lässt sich der Wärmeträgerraum leicht komplett entlüften, und so erwärmt der Wärmeübertrager den Behälter auf seiner gesamten Übertragungsfläche.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigt:
- Figur 1: eine perspektivische Ansicht eines erfindungsgemäßen Behälters,
- Figur 2: eine erste Abwicklung eines zylindrischen Abschnitts einer Behälterwand,
- Figur 3: eine zweite Abwicklung eines zylindrischen Abschnitts einer Behälterwand,
- Figur 4: einen Längsschnitt durch einen erfindungsgemäßen Behälter.

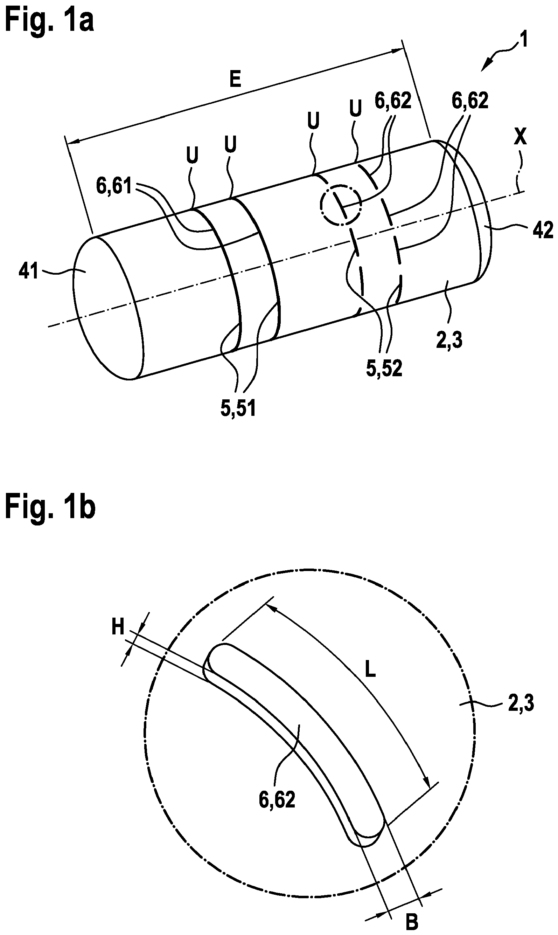

Figur 1a zeigt eine perspektivische Ansicht eines Behälters 1 mit einer Behälterwand 2. Figur 1b zeigt ein Detail aus Figur la. Der Behälter 1 kann zum Aufnehmen und Abgeben eines Mediums dienen. Beispielsweise ist der Behälter 1 ein Speicherbehälter, ein Wärmespeicherbehälter oder ein Trinkwasserbehälter. Beispielsweise ist das Medium ein Wärmespeichermedium oder Trinkwasser. Der Behälter 1 umfasst eine Behälterwand 2, umfassend einen zylindrischen Abschnitt 3 sowie zwei stirnseitige Böden 41, 42. Der Behälter 1 weist vier beispielhafte Versteifungsmittel 5 zur Versteifung der Behälterwand 2 gegenüber inneren und/oder äußeren Drücken und/oder Kräften auf. Erfindungsgemäß umfassen die Versteifungsmittel 5 mindestens eine einteilig mit der Behälterwand 2 ausgebildete, Sicken-ähnliche und/oder Rippen-ähnliche Auswölbung 6 aus der Behälterwand 2. Die Versteifungsmittel 5 sind an dem zylindrischen Abschnitt 3 ausgebildet. Figur 1b zeigt das vergrößerte Detail einer geradlinigen Auswölbung 62 eines Versteifungsmittels 52 mit der Haupterstreckungslänge L und der Breite B in der Ebene der Behälterwand 2, sowie mit der Höhe H senkrecht zur Behälterwand 2. Die Übergänge zwischen Behälterwand 2 und Auswölbung 6 sind bevorzugt mit Übergangsradien ausgerundet ausgebildet (hier nicht dargestellt), so dass scharfe Kanten und hohe Spannungen vermieden werden und ein Kraftfluss gleichmäßiger geleitet wird. Die Auswölbung 6 weist eine Haupterstreckungslänge L auf, die geradlinig entlang der Behälterwand 2 ausgebildet ist. Die dargestellten Versteifungsmittel 5 sind jeweils längs einer gedachten Umfangslinie U auf dem zylindrischen Abschnitt 3 ausgebildet (die Umfangslinie U ergibt sich als Schnittlinie des zylindrischen Abschnitts 3 mit einer gedachten Querebene, die senkrecht zu einer Längsachse X des zylindrischen Abschnitts 3 steht). Die beiden links dargestellten, beispielhaften Versteifungsmittel 5, 51 sind jeweils als eine einzige, rund um den zylindrischen Abschnitt 3 durchgehende Auswölbungen 6, 61 ausgebildet. Die beiden rechts dargestellten, beispielhaften Versteifungsmittel 5, 52 umfassen jeweils eine Mehrzahl von Auswölbungen 6, 62. Die Auswölbungen 6,62 folgen in Umfangsrichtung aufeinander, wobei unmittelbar aufeinander folgende Auswölbungen 6, 62 durch nicht-ausgewölbte Bereiche der Behälterwand 2 beabstandet sind. Die vier Versteifungsmittel 5, 51, 52 können so wie dargestellt an einem Behälter 1 ausgebildet sein; es können aber auch Variationen davon an einem Behälter 1 ausgebildet sein, insbesondere können nur die beiden links dargestellten Versteifungsmittel 5, 51 oder nur die beiden rechts dargestellten Versteifungsmittel 5, 52 an einem Behälter 1 ausgebildet sein. Die Versteifungsmittel 5, 51, 52 sind bevorzugt in einem mittleren Bereich einer Längserstreckung E des zylindrischen Abschnitts 3 ausgebildet; das erhöht zusätzlich die Steifigkeit der Behälterwand 2.

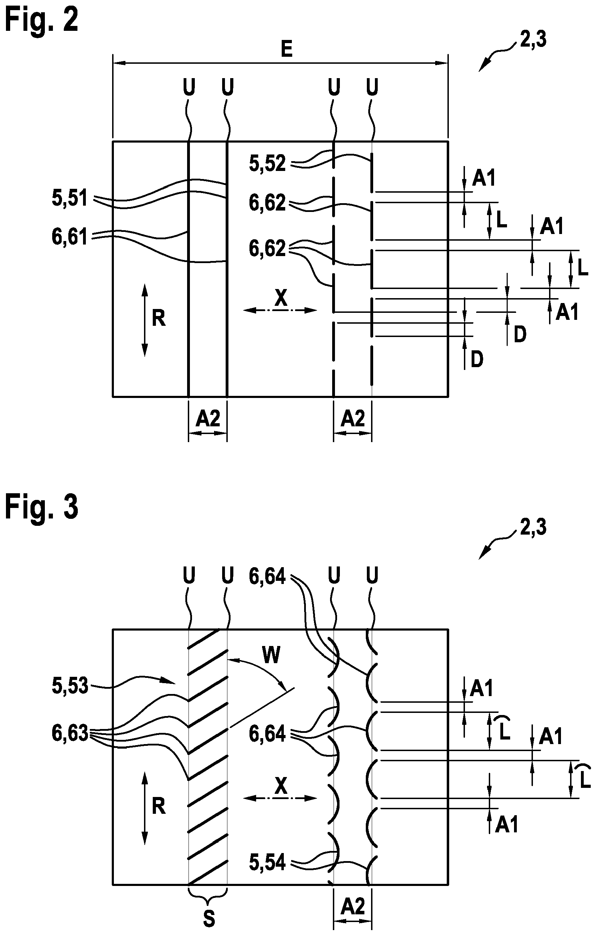

Figur 2 zeigt eine Abwicklung des zylindrischen Abschnitts 3 der Behälterwand 2 des Behälters 1 aus Figur 1. Der zylindrische Abschnitt 3 der Behälterwand 2 ist als in Richtung der Längsachse X aufgeschnittener und in die Ebene ausgerollter zylindrischer Abschnitt 3 dargestellt. Der zylindrische Abschnitt 3 weist wieder die beiden links dargestellten Versteifungsmittel 5, 51, umfassend jeweils eine einzige, rund um den zylindrischen Abschnitt 3 durchgehende, geradlinige Auswölbung 6, 61, sowie die beiden rechts dargestellten Versteifungsmittel 5, 52, umfassend jeweils eine Mehrzahl von geradlinigen Auswölbungen 6,62, auf. Die Auswölbungen 6, 62 der Länge L (rechte Bildhälfte), die in Umfangsrichtung R unmittelbar aufeinander folgen, sind durch nicht-ausgewölbte Bereiche der Behälterwand 2 mittels eines in Umfangsrichtung R gemessenen Abstands A1 beabstandet. Die Auswölbungen 6, 62 zweier benachbarter Versteifungsmittel 52 sind in Umfangsrichtung R gegeneinander versetzt, insbesondere so dass sich ihre Projektionen in Richtung der Längsachse X des zylindrischen Abschnitts 3 auf eine gedachte Umfangslinie U auf dem zylindrischen Abschnitt 3 teilweise überdecken (Überdeckungsmaß D). Die beiden Versteifungsmittel 5, 51 und auch die beiden Versteifungsmittel 5, 52 sind längs zweier Umfangslinien U ausgebildet, wobei die Umfangslinien U mittels eines Abstands A2, gemessen in Richtung der Längsachse X, voneinander beabstandet sind.

Figur 3 zeigt eine alternative Abwicklung des zylindrischen Abschnitts 3 der Behälterwand 2 des Behälters 1. Der zylindrische Abschnitt 3 der Behälterwand 2 ist wieder als in Richtung der Längsachse X aufgeschnittener und in die Ebene ausgerollter zylindrischer Abschnitt 3 dargestellt. Der zylindrische Abschnitt 3 weist links dargestellt ein Versteifungsmittel 5, 53 sowie rechts dargestellt zwei Versteifungsmittel 5,54 auf. Das Versteifungsmittel 5,53 (linke Bildhälfte) umfasst eine Mehrzahl von geradlinigen Auswölbungen 6, 63, die schräg in einem Winkel W zu einer gedachten Umfangslinie U in einem Umfangsstreifen S auf dem zylindrischen Abschnitt 3 ausgebildet sind. Der Winkel W beträgt hier etwa 60°. Die Versteifungsmittel 5, 54 (rechte Bildhälfte) umfassen eine Mehrzahl von bogenförmig ausgebildeten Auswölbungen 6, 64 auf. Die Auswölbungen 6, 64 sind längs zweier Umfangslinien U auf dem zylindrischen Abschnitt 3 ausgebildet. Die Auswölbungen 6, 64 der (Bogen-) Länge L, die in Umfangsrichtung R unmittelbar aufeinander folgen, sind durch nicht-ausgewölbte Bereiche der Behälterwand 2 mittels eines in Umfangsrichtung R gemessenen Abstands A1 beabstandet. Die Versteifungsmittel 5, 54 sind längs zweier gedachter Umfangslinien U ausgebildet, wobei die Umfangslinien U mittels eines Abstands A2, gemessen in Richtung der Längsachse X, voneinander beabstandet sind.

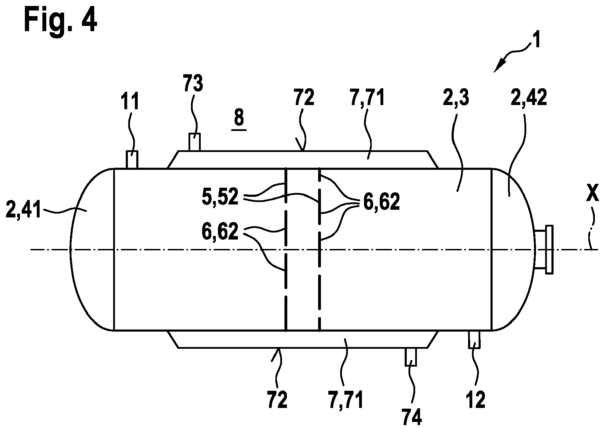

Figur 4 zeigt einen schematischen Längsschnitt durch einen erfindungsgemäßen Behälter 1 mit einem Einlaufanschluss 11 und einem Auslaufanschluss 12. Der Behälter 1 zeichnet sich aus durch einen außen koaxial um den zylindrischen Abschnitt 3 des Behälters 1 und um die Versteifungsmittel 5 herum angeordneten Mantelwärmeübertrager 7. Beispielsweise ist der Behälter 1 umfasst von einer Wärmespeichervorrichtung, insbesondere einer Solarwärmespeichervorrichtung, zur Aufnahme eines Mediums wie eine Wärmespeichermedium oder Trinkwasser. Der Mantelwärmeübertrager 7 dient dem Erwärmen (oder auch Kühlen) eines im Inneren des Behälters 1 aufgenommenen Mediums. Beispielsweise funktioniert der Mantelwärmeübertrager 7 nach dem Prinzip einer Durchströmung mit einem Wärmeträgermedium, insbesondere einem solarthermisch erwärmten Wärmeträgermedium, und weist dazu einen durchströmbaren Wärmeträgerraum 71 und eine den Wärmeträgerraum 71 gegenüber einer Außenumgebung 8 abdichtende Wärmeübertragerwand 72 auf. Das Wärmeträgermedium kann durch einen Einlaufanschluss 73 und einen Auslaufanschluss 74 in den Wärmeträgerraum 71 ein- und ausströmen. Das Wärmeträgermedium kann zumindest zeitweise unter Druck stehen und diesen Druck auf die Behälterwand 2 des Behälters 1 übertragen. Ein herkömmlicher Behälter könnte durch so einen Druck nach innen eingedellt werden. Die Versteifungsmittel 5 erhöhen die Steifigkeit der Behälterwand 2 zum Beispiel auch gegenüber dem äußeren Druck des Wärmeträgermediums.

## Patentansprüche

1. Behälter (1) zum Aufnehmen eines Mediums mit einer Behälterwand (2), **gekennzeichnet durch** mindestens ein Versteifungsmittel (5) zur Versteifung der Behälterwand (2) gegenüber inneren und/oder äußeren Drücken und/oder Kräften, wobei das Versteifungsmittel (5) mindestens eine einteilig mit der Behälterwand (2) ausgebildete, Sicken-ähnliche und/oder Rippen-ähnliche Auswölbung (6) aus der Behälterwand umfasst.

2. Behälter (1) nach Anspruch 1,
wobei die Behälterwand (2) mindestens einen zylindrischen Abschnitt (3) umfasst, wobei das Versteifungsmittel (5) an dem zylindrischen Abschnitt (3) ausgebildet ist.

3. Behälter (1) nach Anspruch 1 oder 2,
wobei die Auswölbung (6) eine Haupterstreckungslänge L aufweist, die entlang der Behälterwand (2), insbesondere geradlinig oder bogenförmig, ausgebildet ist.

4. Behälter (1) nach einem der vorhergehenden Ansprüche,
wobei das Versteifungsmittel (5) längs einer Umfangslinie U auf dem zylindrischen Abschnitt (3) ausgebildet ist, wobei die Umfangslinie U sich als Schnittlinie des zylindrischen Abschnitts (3) mit einer Querebene, die senkrecht zu einer Längsachse X des zylindrischen Abschnitts (3) steht, ergibt.

5. Behälter (1) nach einem der Ansprüche 1 bis 3,
• wobei das Versteifungsmittel (5) schräg in einem Winkel W zu einer Umfangslinie U auf dem zylindrischen Abschnitt (3) ausgebildet ist, wobei die Umfangslinie U sich als Schnittlinie des zylindrischen Abschnitts (3) mit einer Querebene, die senkrecht zu einer Längsachse X des zylindrischen Abschnitts (3) steht, ergibt,
• wobei der Winkel W aus einem Intervall von 5° bis 90°, bevorzugt aus einem Intervall von 20° bis 70°, besonders bevorzugt aus einem Intervall von 30° bis 60°, ausgewählt ist.

6. Behälter (1) nach einem der vorhergehenden Ansprüche,
wobei das Versteifungsmittel (5) in einem Umfangsstreifen S auf dem zylindrischen Abschnitt (3) ausgebildet ist, wobei der Umfangsstreifen S sich als Schnittfläche des zylindrischen Abschnitts (3) mit einem Quader, der mit einer Quaderfläche senkrecht zu einer Längsachse X des zylindrischen Abschnitts (3) steht, ergibt.

7. Behälter (1) nach einem der vorhergehenden Ansprüche,
• wobei das Versteifungsmittel (5) eine Mehrzahl von Auswölbungen (6) umfasst,
• wobei die Auswölbungen (6) in Umfangsrichtung R aufeinander folgen,
• wobei in Umfangsrichtung R unmittelbar aufeinander folgende Auswölbungen (6) durch nicht-ausgewölbte Bereiche der Behälterwand (2) mittels eines in Umfangsrichtung R gemessenen Abstands A1 beabstandet sind.

8. Behälter (1) nach Anspruch 7,
wobei ein Verhältnis von Haupterstreckungslänge L einer Auswölbung (6) zum Abstand A1 gleich oder größer ist als 1 und insbesondere im Bereich 1 bis 5, bevorzugt im Bereich 1,6 bis 2 liegt.

9. Behälter nach einem der vorhergehenden Ansprüche,
wobei ein Verhältnis von Haupterstreckungslänge L einer Auswölbung (6) zu einem Umfang des zylindrischen Abschnitts (3) im Bereich 0,02 bis 0,1, bevorzugt im Bereich 0,05 bis 0,07 liegt.

10. Behälter (1) nach einem der vorhergehenden Ansprüche,
• wobei die Auswölbung (6) eine senkrecht zu einer Haupterstreckungslänge L und senkrecht zu einer Höhe H der Auswölbung (6) gemessene Breite B aufweist,
• wobei die Breite B gleich oder größer, insbesondere mindestens fünfmal größer, als eine Behälterwanddicke ist.

11. Behälter (1) nach einem der vorhergehenden Ansprüche,
• wobei mindestens zwei Versteifungsmittel (5) längs zweier mittels eines Abstands A2 beabstandeter Umfangslinien U und/oder in zwei mittels eines Abstands A2 beabstandeter Umfangsstreifen S auf dem zylindrischen Abschnitt (3) ausgebildet sind,
• wobei ein Verhältnis von Abstand A2 zu einer Breite B der Auswölbungen (6) im Bereich 1 bis 10 liegt und bevorzugterweise größer als 3 ist, und/oder
• wobei ein Verhältnis von Abstand A2 zu Abstand A1 größer als 1 ist.

12. Behälter (1) nach einem der vorhergehenden Ansprüche,
wobei die Auswölbungen (6) zweier benachbarter Versteifungsmittel (5) in Umfangsrichtung R gegeneinander versetzt sind, insbesondere so dass sich ihre Projektionen in Richtung einer Längsachse X des zylindrischen Abschnitts (3) auf eine Umfangslinie U auf dem zylindrischen Abschnitt (3) teilweise überdecken.

13. Behälter (1) nach einem der vorhergehenden Ansprüche,
wobei außen koaxial um den zylindrischen Abschnitt (3) und um die Versteifungsmittel (5) ein Mantelwärmeübertrager (7) angeordnet ist.

14. Wärmespeichervorrichtung, insbesondere Solarwärmespeichervorrichtung, mit einem Behälter (1) nach einem der Ansprüche 1 bis 13.
